(19) **Europäisches Patentamt**

**European Patent Office**

**Office européen des brevets**

(11) **EP 1 178 588 B1**

(12) **EUROPEAN PATENT SPECIFICATION**

(45) Date of publication and mention
of the grant of the patent:
**23.08.2006   Bulletin 2006/34**

(51) Int Cl.:
**H02K 37/22** (2006.01)

(21) Application number: **01810733.4**

(22) Date of filing: **25.07.2001**

(54) **Stepping motor**

Schrittmotor

Moteur pas à pas

(84) Designated Contracting States:
**SE**

(30) Priority: **31.07.2000   JP 2000231234**

(43) Date of publication of application:
**06.02.2002   Bulletin 2002/06**

(73) Proprietor: **MINEBEA Co., Ltd.**
**Kitasaku-gun, Nagano-ken (JP)**

(72) Inventors:
• **Moritsugi, Katsuyuki,**
**c/o Minebea Co. Ltd.**
**Miyota-machi,**
**Kitasaku-gun,**
**Nagano-ken (JP)**

• **Hishida, Hideo,**
**c/o Minebea Co. Ltd.**
**Miyota-machi,**
**Kitasaku-gun,**
**Nagano-ken (JP)**

(74) Representative: **Schaad, Balass, Menzl & Partner AG**
**Dufourstrasse 101**
**Postfach**
**8034 Zürich (CH)**

(56) References cited:
**DE-U- 29 901 512         US-A- 3 453 465**
**US-A- 4 024 732         US-A- 4 800 306**

EP 1 178 588 B1

## Description

BACKGROUND OF THE INVENTION

1. Field of the Invention

The present invention relates to a technological improvement in the operational precision of a stepping motor.

2. Description of the Related Art

Since a stepping motor keeps a rotational angle of every 1 pulse signal constant, a high-precision rotational angle can be obtained according to a number of pulses even in an open loop control. Moreover, since the stepping motor is directly driven by a digital control system, a circuit structure thereof is simplified even when employing as a numerical control for various equipments or an instrument motor. Accordingly, the employment of the stepping motor is extended to various equipments.

Fig. 4 schematically shows a structure of a stepping motor. The stepping motor exemplified therein is called a VR type and a stator 1 thereof has a plurality of poles A, B, C, A', B' and C' around which stator windings are wound. Poles a, b, c and d of a rotor 2 are provided offset in pitch to the respective poles of the stator 1.

Fig. 4 shows a state where a pulse is applied to the pole A of the stator so that the pole a of the rotor is drawn so as to face the pole A of the stator. Also, the rotor 2 fixedly stays where it is without being rotated by means of a function of so-called detent torque even when cutting off an excitation of the pole A of the stator. When a pulse is subsequently applied to the pole B of the stator, the rotor 2 is rotated in a direction indicated by an arrow so as to face the rotor pole b to the stator pole B. And, when a pulse is applied to the stator pole C, the rotor 2 is rotated to a position where the rotor pole c faces the stator pole C. Accordingly, when the pulses are applied to the stator in order of A, B and C, the rotor is shifted by the 30 degrees and rotated by 90 degrees in total.

The above is related to the case where the stepping motor is controlled in a monophasic magnetization system and its rotational angle (step angle) for every one pulse is determined in a pitch between the stator and the rotor poles. Accordingly, a further minification of the step angle will be practically limited because of the pitch between the stator and the rotor poles.

As a countermeasure toward the above monophasic magnetization system, a mono/diphasic magnetization, a micro-step control or the like are employed as a method of minifying the step angle. The mono/diphasic magnetization provides a simultaneous magnetization in the two phases so as to stop the rotor 2 even at a position where the stator pole does not face the rotor pole minifying the step angle by half compared to the one of the monophasic magnetization system. And, the micro-step control seeks the minification of the step angle through altering the magnetized ratio (for example, 1:0.5, 1:0.25 and so on) of the two phases concurrently magnetizing.

However, when stopping the rotor 2 at the position where the stator pole does not face the rotor pole and cutting off the magnetization current, the detent torque does not function to fix the rotor 2 at the position, but the "offset" would occur in the rotational direction of the rotor 2. In the case where the stepping motor is accumulatively rotated, such an "offset" will work as an obstacle to obtain a high-precision rotational angle corresponding to the pulse number by means of the open loop control.

Accordingly, in the case where the stepping motor is driven by using the mono/diphasic magnetization method or the micro-step control method or the like, a rotary shaft 3 is provided with a brake 4 for limiting the rotation of the shaft 3 as shown in Fig. 5. The brake 4 provides a constant damping force to the rotary shaft 3 by clamping with a pair of brake shoes 6 having arcuate damping surfaces supported at tip end portions of a pair of plate springs 5. Fixing a pair of plate springs 5 to a motor housing 7A, bracket 5a is provided at the proximal end portion of a pair of plate springs 5. Adjustment pins 8 are provided at a front surface 7a of the motor housing 7 so as to depress the brake shoes 6 of the tip end portions of the plate springs 5 toward the rotary shaft 3. Also, screw holes 9 are formed in the front surface 7a for fixing the stepping motor.

However, in the conventional brake 4, it has been difficult to mass-produce the plate springs 5 with a constant spring force. Moreover, adjusting a spring force after mounting the spring and a balance of a pair of plate springs 5 has been very problematic. And, there have been both troublesome and costly disadvantageous to arcuately machine the damping surfaces of the brake shoes 6. In addition, it has been difficult to stabilize the sliding contact area between the rotary shaft 3 and the damping surfaces of the brake shoes 6, which makes impossible to obtain a constant frictional torque. Furthermore, since the brake shoes 6 are made in a direct sliding contact with the rotary shaft 3, the brake torque is notably changeable with time due to the surface roughness of the rotary shaft 3 or the development of wear, which may damage the rotary shaft 3.

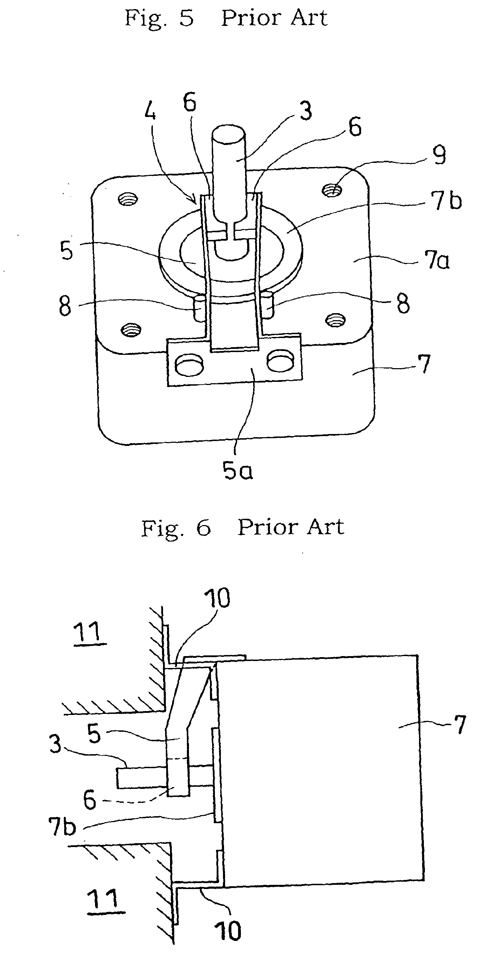

And, as shown in Fig. 6, the plate springs 5 are fixed in such a manner as to overstride a flange 7b provided on the front surface 7a of the motor housing 7. Accordingly, the provision of stays 10 will be inevitable to mount the stepping motor, whereby the flange 7b is no longer used for centering the rotary shaft 3. Thus, the precision of centering the rotary shaft 3 and a fixed object 11 may be degraded. And, among many problems the flexure of the plate springs 5 causing a resonance vibration would be one of them. Brakes applied to electric motors are disclosed in DE-U-29 901 512 ans US-A-3 453 465.

## SUMMARY OF THE INVENTION

In light of the above-described problems, an object of the present invention is to effectively suppress the offset of a rotor and to enhance an operational precision of the stepping motor in the case where the stepping motor is driven by using methods such as a one/two phase magnetization and a micro-step control.

In order to attain these objects, according to the present invention, a stepping motor comprises a brake wherein a brake base is provided in a portion where a rotary shaft of a motor housing projects, a brake plate fitted to the rotary shaft so as to face the brake base in such a manner that the brake plate is slidable in an axial direction of the rotary shaft and the rotation of the brake plate is limited to the minimum in a rotational direction, and the brake plate has a steady pressure toward the brake base at a constant level.

According to the present invention, since the brake plate is fitted to the rotary in such a manner as to not being rotated in the rotational direction but slidable in the axial direction, the brake plate can press the brake base without applying the axial force to the rotary shaft itself. Then, by pressing the brake plate to the brake base a frictional force will generate in the contact surfaces of the two and the frictional force can be used as a brake torque to limit the rotation of the rotary shaft. Also, the brake plate has a steady pressure toward the brake base at a constant level always generating a constant frictional force being able to suppress the offset of the rotary shaft irrespective of the positional relationship between the rotor projection poles and the stator projection poles when the magnetization current of the stepping motor is cut off. A precise definition of the invention is given in the claims.

Also, according to the present invention, the stepping motor has a pressing means mounted on the rotary shaft for pressing the brake plate to the brake base. With such a structure, it is possible to dispose all the brake plate, the brake base and the pressing means coaxially to the rotary shaft.

Also, according to a further implementation of the invention, the pressing means is constructed as follows: a coiled spring is inserted and fitted to the rotary shaft, one end portion of the coiled spring is in contact with the brake plate, and the other end portion is positioned by a means such as a stop ring fitted around the rotary shaft.

With such a structure, a force for pressing the brake plate to the brake base is applied by the spring force of the coiled spring positioned in the axial direction by the stop ring fitted around the rotary shaft.

Also, according to a further implementation of the present invention, a diameter of the brake base and the brake plate is smaller than one of a front flange provided in a portion where the rotary shaft of the housing projects. The outer diameter of the front flange is in general a standard guide surface (in-low) when mounted coaxially with the non-stationary object. With such a structure, when the stepping motor is fixed to the stationary object, the brake base and the brake plate will not be an obstruction in the mounting operation.

According to a further implementation of the present invention, the brake plate is prevented from being rotated in the rotational direction of the rotary shaft by means of the engagement between a stop pin fixed to the rotary shaft and a groove provided in an axial groove of the brake plate, that is, the brake plate is restricted from being moved in the rotational direction of the rotary shaft while being allowed in the axial movement to the rotary shaft.

According to a further implementation of the present invention, the brake plate is prevented from being rotated in the rotational direction of the rotary shaft by means of the engagement of a spline formed in each of the brake plate and the rotary shaft, that is, the brake plate is restricted from being moved in the rotational direction of the rotary shaft while being allowed in the axial movement to the rotary shaft.

Also, according to a further implementation of the present invention, the stepping motor comprises a brake wherein the brake plate is directly fixed so as to face the motor housing without being provided with the brake base while the brake plate presses the housing at a constant level. With such a structure, it is possible to obtain a necessary braking force while reducing the number of the structural elements of the brake to limit the rotation of the rotary shaft.

Furthermore, according to a further implementation of the present invention, the stepping motor comprises a brake wherein a thin spacer having an anti-wear property and a stable frictional coefficient is interposed between a braking surface of the brake base and one of the brake plate so as to include a plurality of frictional surfaces. Then, a necessary braking force can be shared by a plurality of frictional surfaces.

## BRIEF DESCRIPTION OF THE DRAWINGS

In the accompany drawings:

Fig. 1 is a side view of a stepping motor in accordance with an embodiment of the invention;
Fig. 2 is a front view of the stepping motor shown in Fig. 1;
Fig. 3 is a schematic view showing a state where the stepping motor in accordance with the embodiment of the invention is fixed to a stationary object;
Fig. 4 is a schematic view showing a structure of the stepping motor;
Fig. 5 is a perspective view showing a conventional stepping motor provided with a brake; and
Fig. 6 is a schematic view showing a state where the stepping motor shown in Fig. 5 is fixed to a stationary object.

DESCRIPTION OF THE PREFERRED EMBODIMENTS

An embodiment of the present invention will now be described with reference to the accompanying drawings. Here, the same reference numerals as those of the conventional case are used to indicate the same or the like components or members, and the detailed explanation therefor will be omitted.

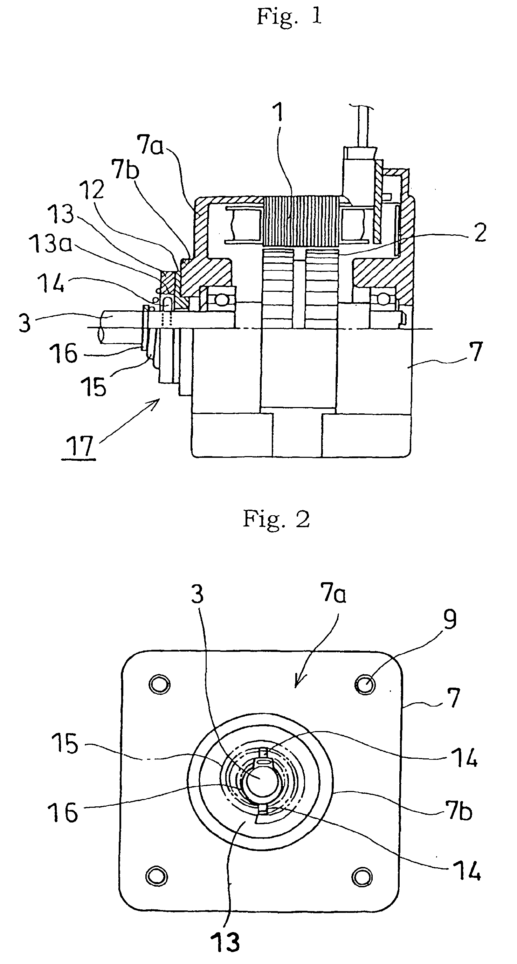

Fig. 1 is a side view of a stepping motor in accordance with an embodiment of the present invention while partially showing a sectional part. Also, Fig. 2 is a frontal view of the stepping motor shown in Fig. 1.

A disc-like brake base 12 is fixed with screws or by welding to a flange 7b of a motor housing 7 provided at a portion where the rotary shaft 3 projects. An annular brake plate 13 is fitted to the rotary shaft 3. Then, a stop pin 14 fixed to the rotary shaft 3 is engaged with a key groove 13a provided in an axial hole of the brake plate 13 at a minimum allowance gap to prevent the rotation in the rotational direction (rotational direction of the rotary shaft 3) while allowing the movement of the brake plate 13 in the axial direction (axial direction of the rotary shaft 3) relative to the rotary shaft 3.

Furthermore, a conical coiled spring 15 is fitted to the rotary shaft 3. One end portion (large diameter portion) of the conical coiled spring 15 is in contact with the brake plate 13 and the other end portion (small diameter portion) is positioned in an axial direction by means of a stop ring 16 or the like fitted to the rotary shaft 3. Then, the brake plate 13 always presses the brake base 12 at a constant level by the spring force of the conical coiled spring 15 (spring force is used in this embodiment, but this is not limited thereto and any other suitable force such as an electromagnetic force may be used). Note that the diameter of the brake base 12 and the brake plate 13 is smaller than one of the front flange 7b. And, the large diameter portion of the conical coiled spring 15 is also made smaller than the diameter of the front flange 7b in the same manner of the above.

Moreover, the frictional surface of the brake base 12 has a flat surface and is perpendicularly assembled to the rotary shaft 3. And the brake plate 13 has a uniform thickness and frictional surface thereof is a flat surface so as to increase the contact area of frictional surfaces. Also, the material for the brake base 12 and the brake plate 13 is not specified; however, since the continuous friction is attained in this embodiment, it is preferable to use a plastic material so as to achieve a low inertia in view of the low wear property. Nevertheless, it is possible to use a metal material having the same property. The brake 17 in accordance with this embodiment has the above-described structure.

The following advantageous effects are attainable with the above embodiments. First, since the brake plate 13 is fitted to the rotary shaft 3 not to rotate only in the rotational direction of the rotary shaft 3, it is possible to press the brake plate 13 to the brake base 12 without applying a force in the axial direction to the rotary shaft 3. The brake plate 13 is pressed against the brake base 12 with the conical coiled spring 15 so that the rotation of the rotary shaft 3 is limited by the frictional resistance generated in the contact surface of the two which is used as a brake torque $T_b$. Since the braking surfaces of the brake base 12 and the brake plate 13 are flat, the surfaces thereof match well in such a manner that a uniform frictional force will stably generate.

The brake torque $T_b$ is given in the following formula:

$$T_b = \mu \cdot P \cdot r$$

Where $\mu$ is the frictional coefficient between the brake base 12 and the brake plate 13, P is the press force for pressing the brake plate 13 to the brake base 12 with the conical coiled spring 15, and r is the average radius of the braking surface of the brake plate 13. If this relationship is applied to the conventional brake 4 shown in Figs. 5 and 6, r is the radius of the arcuate braking surface formed in the brake shoes 6. This radius is substantially same as the radius of the rotary shaft 3 and is significantly smaller than the radius of the braking surface of the brake plate 13 in this embodiment. Accordingly, it is possible to make much smaller the values of $\mu$ and P upon obtaining substantially the same brake torque as that of the conventional brake 4.

As a result, it is possible to use the conical coiled spring 15 with a low spring rate, and also the assembling work as well as the adjustment of the spring force, etc. become easier to perform. In addition, since materials for the brake base 12 and the brake plate 13 are widely selected, the sufficient braking force can be attained with less expensive parts. Also, the material durability can be a first priority when selecting.

Note that it is possible to use the different materials for the brake base 12 and the brake plate 13 such as brass and synthetic resin (fluorine system resin or the like) in combination. Since the value $\mu$ may be small as described above in this embodiment, materials such as Teflon, Nylon 66 (both TMs of Dupont), Duracon (TM of Polyplastic Company) or the like can be used which have a stable frictional coefficient with less wear.

Further, the spring force of the conical coiled spring 15 can be easily adjusted by changing the thickness of the brake plate 13 or changing the position or the shape of the stop ring 16 fitted to the rotary shaft 3 so as to adjust the shrinkage amount of the conical coiled spring 15. Also, the spring force can be adjusted by changing the radii of the brake base 12 and the brake plate 13. Furthermore, since the brake 17 according to the embodiment may have sufficient rigidity in its respective structural parts, it is possible to easily suppress the generation of the resonant vibration.

Furthermore, the brake torque is obtainable by means of the braking surfaces of the brake base 12 and the brake plate 13 irrespective of the rotary shaft 3 so that the occurrence of the surface roughness and wear or the like in the rotary shaft 3 may be suppressed, thereby preventing the rotary shaft 3 to be damaged. And, it is possible to suppress the aging change of the brake torque to a minimum level.

As described above, the brake 17 according to this embodiment makes it possible to stably generate a constant brake torque toward the rotary shaft 3. Accordingly, it is possible to suppress the generation of the offset of the rotary shaft and to increase the operational precision of the stepping motor irrespective of the positional relationship between the rotor projection poles and the stator projection poles when cutting off the magnetization current of the stepping motor.

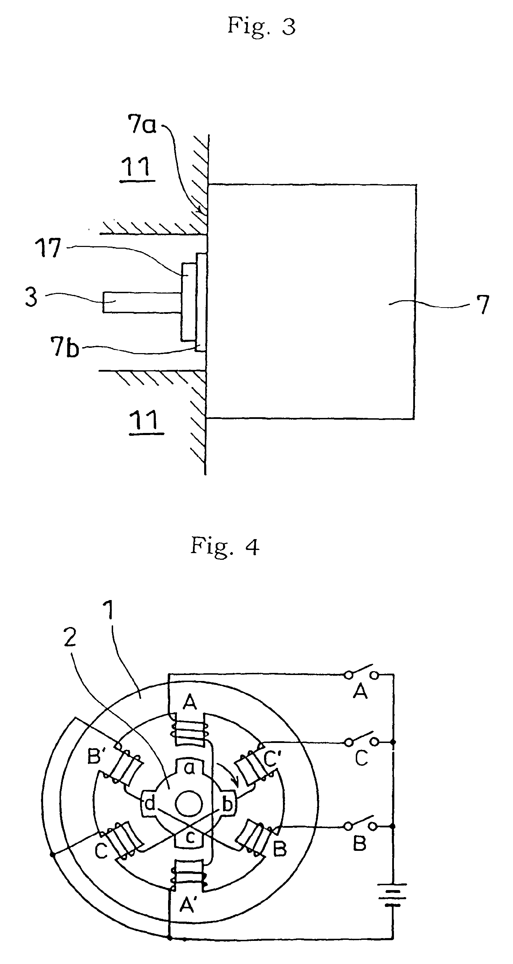

Furthermore, as this embodiment shows, the brake base 12, the brake plate 13 and the conical coiled spring 15 which are the components of the brake 17 are all arranged coaxially with the rotary shaft 3. And, the diameter of the brake base 12, the brake plate 13 and the conical coiled spring 15 is smaller than one of the front flange 7b. Accordingly, the brake 17 as a whole can be assembled in front of the front flange 7b in a compact form. And, the front surface 7a of the motor housing 7 can be directly fixed to the fixed object 11 without using mounting stays or the like when fixing the stepping motor to the fixed object 11 as shown in Fig. 3. For this reason, the centering precision between the fixed object 11 and the rotary shaft 3 will not be degraded and also the flange 7b may be used for centering the rotary shaft 3.

Note that, in the embodiment of the present invention, the rotation of the brake plate 13 to the rotary shaft 3 is prevented by the combination of the stop pin 14 fixed to the rotary shaft 3 and the key groove 13a provided in the axial hole of the brake 13. However, any other suitable structures can be applied if the brake plate 13 can be fixed in the rotational direction of the rotary shaft 3 while the axial movement of the brake plate 13 to the rotary shaft 3 is allowed. For instance, it is possible to obtain the same effect by forming the spline grooves in the brake plate 13 and the rotary shaft 3, respectively and then engaging these spline grooves.

Also, there may be provided with a brake 17 wherein the brake plate 13 directly faces the front surface 7a of the motor housing 7 without being provided with any brake base 12 in accordance with the embodiment of the present invention in such a manner as to press at a constant pressure. With such a structure, the rotation of the rotary shaft 3 can be limited with a necessary braking force while reducing the number of the structural elements of the brake 17.

Furthermore, although not shown in the Figs., a thin spacer having the anti-wear property with a stable frictional coefficient is interposed between the braking surface of the brake base 12 and the braking surface of the brake plate 13 (thin spacer is rotatable relative to the rotary shaft 3) so as to form the frictional surface between the braking surface of the thin spacer and the braking surface of the brake base 12, and the frictional surface between the braking surface of the thin spacer and the braking surface of the brake plate 13. Thus, the brake 17 including a plurality of frictional surfaces is constructed so that the necessary braking force is shared at each frictional surface.

With such a structure of the present invention, the following advantages are ensured. First, with a stepping motor in accordance with the present invention, it is possible to effectively suppress the offset of a rotor and to increase an operational precision of the stepping motor in the case where the stepping motor is driven by using methods such as a one/two phase magnetization and a micro-step control.

Also, with a stepping motor according the present invention, it is possible to fix the stepping motor directly to the fixed object while disposing the brake base, the brake plate and means for pressing the brake plate to the brake base coaxially with the rotary shaft thereby further accelerating the miniaturization of the brake.

Also, with a stepping motor in accordance with the present invention, an elastic force of conical coiled spring is applied as a force for pressing the brake plate to the brake base thereby facilitating the adjustment of the braking torque and making a stable generation of the constant brake torque possible.

Also, with a stepping motor in accordance with the present invention, it is possible to fix the stepping motor directly to the fixed object while preventing the centering precision between the fixed object and the rotary shaft to be degraded.

Also, with a stepping motor in accordance with the present invention, it is possible to provide a structure for the brake which effectively prevents the offset of the rotor and to prevent the rotation in the rotational direction while allowing the axial movement of the brake plate to the rotary shaft.

Also, with a stepping motor in accordance with the invention, it is possible to increase the operational precision of the stepping motor with the necessary braking force while reducing the number of the structural elements of the brake for limiting the rotation of the rotary shaft.

Furthermore, with a stepping motor in accordance with the present invention, it is possible to increase the operational precision by sharing the necessary braking force with a plurality of frictional surfaces for limiting the rotation of the rotary shaft.

**Claims**

1. A stepping motor comprising a motor housing (7), a rotary shaft (3) which protrudes of said motor housing (7) and a brake (17) comprising a brake base (12), a brake plate (13) which is fitted to the rotary shaft (3) such that it is slidable in an axial direction of the rotary shaft (3) and non-rotatable relative to the rotary shaft (3), and a coiled spring (15) that is sandwiched between the brake plate (13) and a stopping means (16), the coiled spring (15) pressing said brake plate (13) against the brake base (12) at a constant pressure, **characterised in that** said brake (17) is provided in a portion of a motor housing (7) where a rotary shaft (3) projects, a stop pin (14) which is fixed to the rotary shaft (3) is provided and engages with a key groove (13a) provided in the brake plate (13) at a minimum allowance gap so as to limit displacement of the brake plate (13) only to an axial direction but not to a rotational direction relative to the shaft (3), the stopping means is a stop ring (16) which is fixed to the rotary shaft (3).

2. A stepping motor according to claim 1, wherein said coiled spring (15) has a conical shape.

3. A stepping motor according to claim 1 or 2 wherein a diameter of said brake base (12) and said brake plate (13) is smaller than a diameter of a front flange provided in a portion of said housing (7) where said rotary shaft (3) projects.

4. A stepping motor according to any one of claims 1 to 3, wherein the non-rotability of said brake plate (13) relative to said rotary shaft (3) is performed by an engagement of a spline formed in each of said brake plate (13) and said rotary shaft (3).

5. A stepping motor according to any one of claims 1 to 4, comprising a brake (17) wherein said brake plate (13) directly facing said motor housing (7) is pressed against said housing (7) at a constant pressure without being provided with said brake base (12).

6. A stepping motor according to any one of claims 1 to 4, comprising a brake (17) wherein a thin spacer having an anti-wear property and a stable frictional coefficient is interposed between a braking surface of said brake base (12) and a braking surface of said brake plate (13) to include a plurality of frictional surfaces.

7. A stepping motor according to any one of claims 1 to 6, wherein the brake (17) is disposed outside of the motor housing (7).

**Patentansprüche**

1. Schrittmotor, umfassend ein Motorgehäuse (7), eine Rotorwelle (3), welche aus besagtem Motorgehäuse (7) herausragt, und einer eine Bremsbasis (12) umfassenden Bremse (17), einer Bremsscheibe (13), welche derart an der Rotorwelle (3) eingebaut ist, dass sie in axialer Richtung der Rotorwelle (3) gleitend und bezüglich der Rotorwelle (3) nicht drehbar ist, und einer Spiralfeder (15), welche zwischen der Bremsscheibe (13) und einem Anschlagmittel (16) eingeklemmt ist, wobei die Spiralfeder (15) besagte Bremsscheibe (13) bei einem konstanten Druck gegen die Bremsbasis (12) presst, **dadurch gekennzeichnet, dass** besagte Bremse (17) in einem Abschnitt des Motorgehäuses (7) angeordnet ist, wo die Rotorwelle (3) hervorsteht, ein an der Rotorwelle (3) befestigter Anschlagstift (14), vorgesehen ist und mit einer minimalen Abmasslücke in eine Keilnut (13a) eingreift, die in der Bremsscheibe (13) angeordnet ist, um eine Verschiebung der Bremsscheibe (13) bezüglich der Rotorwelle (3) nur in einer axialen Richtung, nicht aber in einer Drehrichtung zu begrenzen, das Anschlagmittel ein Anschlagring (16) ist, welcher an der Rotorwelle (3) befestigt ist.

2. Schrittmotor nach Anspruch 1, **dadurch gekennzeichnet, dass** besagte Spiralfeder (15) eine konische Form hat.

3. Schrittmotor nach Anspruch 1 oder 2, **dadurch gekennzeichnet, dass** ein Durchmesser von besagter Bremsbasis (12) und besagter Bremsscheibe (13) kleiner als ein Durchmesser eines Stirnflansches ist, welcher in einem Abschnitt des Gehäuses (7) angeordnet ist, wo die Rotorwelle (3) hervorsteht.

4. Schrittmotor nach einem der Ansprüche 1 bis 3, **dadurch gekennzeichnet, dass** die Nichtdrehbarkeit der besagten Bremsscheibe (13) bezüglich der Rotorwelle (3) durch einen Eingriff eines in jeden der besagten Bremsscheibe (13) und besagten Rotorwelle (3) geformten Keils ausgeführt ist.

5. Schrittmotor nach einem der Ansprüche 1 bis 4, umfassend eine Bremse (17), wobei besagte Bremsscheibe (13), welche direkt dem Motorgehäuse (7) zugewandt ist, bei einem konstanten Druck gegen besagtes Gehäuse (7) gepresst wird, ohne mit der besagten Bremsbasis (12) versehen zu sein.

6. Schrittmotor nach einem der Ansprüche 1 bis 4, umfassend eine Bremse (17), wobei ein dünner Abstandshalter mit einer Anti-Verschleisseigenschaft und einem stabilen Reibungskoeffizient zwischen einer Bremsoberfläche von besagter Bremsbasis (12) und einer Bremsoberfläche von besagter Bremsscheibe (13) eingefügt ist, um eine Vielzahl von Bremsflächen zu enthalten.

7. Schrittmotor nach einem der Ansprüche 1 bis 6, **dadurch gekennzeichnet, dass** die Bremse (17) ausserhalb des Motorgehäuses (7) angeordnet ist.

## Revendications

1. Moteur pas à pas qui comprend une carcasse de moteur (7), un arbre rotatif (3) qui dépasse de ladite carcasse de moteur (7) et un frein (17) comprenant une cale de frein (12), un plateau de frein (13), qui est monté sur l'arbre rotatif (3) de telle façon qu'il peut coulisser dans la direction de l'axe de l'arbre rotatif (3) mais ne peut pas tourner par rapport à l'arbre rotatif (3), et un ressort hélicoïdal (15), qui est coincé entre le plateau de frein (13) et un moyen d'arrêt (16), le ressort hélicoïdal (15) appuyant ledit plateau de frein (13) contre la cale de frein (12) avec une pression constante, **caractérisé en ce que** ledit frein (17) est installé dans une partie de la carcasse de moteur (7) où l'arbre rotatif (3) dépasse, qu'une goupille de butée (14) qui est fixée à l'arbre rotatif (3) est installée et vient en prise avec un logement de clavetage (13a) pratiqué dans le plateau de frein (13) avec un écart de tolérance minimal afin de limiter le déplacement du plateau de frein (13) seulement au sens axial mais pas au sens de rotation par rapport à l'arbre (3) et que le moyen d'arrêt est une bague de retenue (16) qui est fixée sur l'arbre rotatif (3).

2. Moteur pas à pas selon la revendication 1, dans lequel ledit ressort hélicoïdal (15) a une forme conique.

3. Moteur pas à pas selon la revendication 1 ou 2, dans lequel le diamètre de ladite cale de frein (12) et dudit plateau de frein (13) est inférieur au diamètre d'un épaulement avant disposé dans une partie de ladite carcasse (7) où ledit arbre rotatif (3) dépasse.

4. Moteur pas à pas selon l'une quelconque des revendications 1 à 3, dans lequel c'est un enclenchement de deux cannelures formées respectivement dans ledit plateau de frein (13) et dans ledit arbre rotatif (3) qui empêche ledit plateau de frein (13) de tourner par rapport audit arbre rotatif (3).

5. Moteur pas à pas selon l'une quelconque des revendications 1 à 4, comprenant un frein (17) dans lequel ledit plateau de frein (13), qui fait directement face à ladite carcasse de moteur (7), est appuyé contre ladite carcasse (7) avec une pression constante sans que ledit frein (17) soit pourvu de ladite cale de frein (12).

6. Moteur pas à pas selon l'une quelconque des revendications 1 à 4, comprenant un frein (17) dans lequel on intercale une mince rondelle d'espacement ayant des propriétés anti-usure et un coefficient de frottement stable entre la surface de freinage de ladite cale de frein (12) et la surface de freinage dudit plateau de frein (13) pour inclure une pluralité de surfaces de frottement.

7. Moteur pas à pas selon l'une quelconque des revendications 1 à 6, dans lequel le frein (17) est disposé à l'extérieur de la carcasse de moteur (7).

Fig. 1

Fig. 2

Fig. 3

Fig. 4

Fig. 5   Prior Art

Fig. 6   Prior Art